# EUROPÄISCHE PATENTSCHRIFT

(11) **EP 2 234 858 B1**
(45) Veröffentlichungstag und Bekanntmachung des Hinweises auf die Patenterteilung: **14.03.2012**
(21) Anmeldenummer: 08871029.8
(22) Anmeldetag: 12.11.2008
(51) Int. Cl.: B60W 20/00, B60W 30/18, B60W 50/06

(54) **TRIEBSTRANGANORDNUNG EINES FAHRZEUGS UND VERFAHREN ZUR STEUERUNG DES BETRIEBES EINER TRIEBSTRANGANORDNUNG EINES FAHRZEUGS**
DRIVE TRAIN ARRANGEMENT OF A VEHICLE AND METHOD FOR CONTROLLING THE OPERATION OF A DRIVE TRAIN ARRANGEMENT OF A VEHICLE
DISPOSITIF DE TRANSMISSION D'UN VÉHICULE ET PROCÉDÉ DE COMMANDE DU FONCTIONNEMENT D'UN DISPOSITIF DE TRANSMISSION D'UN VÉHICULE

(30) Priorität: 15.01.2008 DE 102008004366
(43) Veröffentlichungstag der Anmeldung: 06.10.2010
(73) Patentinhaber: Robert Bosch GmbH, 70442 Stuttgart (DE)
(72) Erfinder: SCHENK, Rene, 71732 Tamm (DE)
(86) Internationale Anmeldenummer: PCT/EP2008/065399
(87) Internationale Veröffentlichungsnummer: WO 2009/089942

(56) Entgegenhaltungen:
- EP-A- 1 418 083
- DE-A1-102004 002 061
- DE-A1-102004 032 173
- DE-A1-102006 005 468
- DE-A1-102006 048 358

## Beschreibung

Die Erfindung betrifft eine Triebstranganordnung eines Fahrzeugs mit den im Oberbegriff des Anspruchs 1 genannten Merkmalen einerseits und ein entsprechendes Verfahren zur Steuerung des Betriebes einer Triebstranganordnung eines Fahrzeugs mit den im Oberbegriff des Anspruchs 6 genannten Merkmalen andererseits.

### Stand der Technik

Eine Triebstranganordnung eines Fahrzeugs und ein Verfahren zur Steuerung des Betriebes einer Triebstranganordnung eines Fahrzeugs der eingangs genannten Art sind im Allgemeinen bekannt. Die gattungsgemäße Triebstranganordnung umfasst zumindest eine Verbrennungskraftmaschine, die anhand einer daran mittels einer Kupplung kuppelbaren und mittels eines Drehzahlreglers regelbaren elektrischen Maschine startbar ist. Dabei bilden die beiden Antriebsmaschinen einen so genannten Hybridantrieb. Das Konzept des Hybridantriebs gewinnt in der Automobiltechnik auf Grund einer damit einhergehenden Verbrauchsoptimierung, einer Emissionsreduktion sowie einer Verbesserung des subjektiven Fahrempfindens zunehmend an Bedeutung. Der Hybridantrieb weist neben der Verbrennungskraftmaschine wenigstens eine weitere Antriebsquelle auf, die nicht mit fossilen Brennstoffen betrieben werden muss. Im vorliegenden Fall kommt die elektrische Maschine als weitere Antriebsquelle zum Einsatz. Durch eine geeignet Betriebsstrategie können Vorteile der unterschiedlichen Antriebsquellen optimal genutzt und Nachteile vermieden werden. Die Kombination der Verbrennungskraftmaschine mit der elektrischen Maschine ist dabei die dominierende Ausführungsform.

Fahrzeuge mit einem Hybridantrieb weisen gegenüber konventionell, also ausschließlich verbrennungsmotorisch, angetriebenen Fahrzeugen einen geringeren Kraftstoffverbrauch auf. Die Verbrauchseinsparung ist auf die hybridspezifischen Optionen der so genannten Energie-Rekuperation während eines Bremsvorganges sowie auf die Umsetzung von Start-Stop-Funktionen zurückzuführen. Bei dem Hybridantrieb wird zwischen einem Parallel-Hybrid, einem Seriell-Hybrid und einem Split-Hybrid unterschieden. Allen gemeinsam ist die Verwendung zweier Energiespeicher, nämlich einer Batterie und einem Kraftstofftank. Als Alternative zu der Batterie sind auch Kondensatoren einsetzbar. Ein weiteres Unterscheidungsmerkmal bei Hybridantrieben ist die Leistungsfähigkeit der jeweils eingesetzten elektrischen Maschine. Hierbei wird zwischen einem Mild-Hybrid und einem Full-Hybrid unterschieden, wobei unter dem Full-Hybrid ein Fahrzeug zu verstehen ist, das zumindest zeitweise in der Lage ist, mit rein elektrischem Antrieb zu fahren. So genannte leistungsverzweigende Hybridantriebe bleiben für die vorliegende technische Lösung außer Betracht, da deren Startvorgang anders abläuft und sich daher das der Erfindung zugrunde liegende Problem nicht stellt. Weiterhin sind so genannte Starter-Generatoren bekannt, deren elektrische Maschine jedoch fest mit der Kurbelwelle der Verbrennungskraftmaschine verbunden ist und daher das Problem der Synchronisation zwischen der Verbrennungskraftmaschine und der elektrischen Maschine nicht auftritt.

Aus der DE gattungsbildenden 10 2006 005468 ist ein Verfahren zum Betreiben eines Parallelhybridantriebstranges bekannt, bei dem die Verbrennungsmachine mittels einer elektrischen Maschine gestartet wird, wobei diese mittels einer schleifenden Kupplung mit der Verbrennungsmaschine gekoppet wird.

### Offenbarung der Erfindung

Die erfindungsgemäße Triebstranganordnung eines Fahrzeugs mit den im Anspruch 1 genannten Merkmalen bietet demgegenüber den Vorteil, dass bei einem rein elektrischen Fahrbetrieb, jedoch höherem Leistungsbedarf oder leerer werdender Batterie die starterlose Verbrennungskraftmaschine mittels der elektrischen Maschine gestartet werden kann, ohne Störungen im Antriebsstrang hervorzurufen. Hierbei kommt die Kupplung zum Einsatz, welche während des Fahrbetriebs geschlossen und auf ein definiertes Schlupfmoment gesteuert wird. Mit dem durch die elektrische Maschine bereitgestellten Schlupfmoment kann dann die Verbrennungskraftmaschine beschleunigt werden, bis sie die gleiche Drehzahl wie die elektrische Maschine erreicht hat und sich dadurch ein Drehzahlabgleich im Sinne einer Drehzahladaption respektive Drehzahlsynchronisation einstellt. Dabei erfolgt eine Erfassung eines Regelwertes des Drehzahlreglers gegen Ende zumindest eines Startvorgangs der Verbrennungskraftmaschine bei noch einem Schlupfeinfluss unterliegender Kupplung, wobei ein Vergleich des Regelwertes mit einem Vorgabewert dazu dient, eine Werteabweichung zu ermitteln, welche mittels eines Korrekturwertes bei einem erneuten Startvorgang kompensierbar ist. Gleiches gilt in analoger Weise für das Verfahren zur Steuerung des Betriebes einer Triebstranganordnung eines Fahrzeugs mit den Merkmalen des Anspruchs 6.

Vorteilhafte Weiterbildungen ergeben sich durch die Merkmale der abhängigen Ansprüche.

In einer vorteilhaften Ausgestaltung der Erfindung ist es vorgesehen, dass der Korrekturwert als Festwert, über einen Korrekturfaktor oder in Abhängigkeit der Größe des Regelwertes bestimmbar ist. Hierbei kann je nach Einsatz- und Anwendungsfall die geeignetste Variante herangezogen werden, um mit einem möglichst geringen Aufwand einen angemessenen Korrektureffekt zu erzielen.

In einer weiteren vorteilhaften Ausgestaltung der Erfindung ist es vorgesehen, dass die Verbrennungskraftmaschine und/oder die elektrische Maschine mittels eines hydraulischen Drehmomentwandlers mit einem Automatikgetriebe in Wirkverbindung bringbar sind. Hierbei entsteht unter Einbeziehung des an die als Triebstrangabschnitt ausgebildete Triebstranganordnung ankuppelbaren Getriebes ein umfassender Antriebsstrang, der als solcher in einem Fahrzeug, insbesondere Kraftfahrzeug, verbaut werden kann.

In einer bevorzugten Ausgestaltung der Erfindung ist es vorgesehen, dass die Verbrennungskraftmaschine und/oder die elektrische Maschine mittels einer Wandler-Überbrückungskupplung mit dem Automatikgetriebe unmittelbar kuppelbar sind. Durch die unmittelbare Kupplung zumindest einer der Maschinen mit dem Getriebe ergibt sich ein schlupffreier Antriebsstrang und damit ein unmittelbares Kraftübertragungsverhalten.

In einer weiteren bevorzugten Ausgestaltung der Erfindung ist es vorgesehen, dass die elektrische Maschine mit einem Energiespeicher, insbesondere wiederaufladbare Batterie, in einer Wirkverbindung steht. Die elektrische Maschine wird einerseits in ihrer Funktion als Antriebseinheit von der Batterie mit Energie versorgt und lädt diese andererseits in ihrer Funktion als Generator. Bei der letztgenannten Funktion wird die elektrische Maschine von der Verbrennungskraftmaschine angetrieben.

Die Vorteile der abhängigen Ansprüche 2 bis 5 gelten in analoger Weise auch für die Merkmale der abhängigen Verfahrensansprüche.

### Kurze Beschreibung der Zeichnungen

Die Erfindung sowie vorteilhafte Ausgestaltungen gemäß den Merkmalen der weiteren Ansprüche werden im Folgenden anhand der in den Zeichnungen dargestellten Ausführungsbeispiele näher erläutert, ohne dass insoweit eine Beschränkung der Erfindung erfolgt; diese umfasst vielmehr alle Abwandlungen, Änderungen und Äquivalente, die im Rahmen der Ansprüche möglich sind. Es zeigen:
- Figur 1: eine vollständige Triebstranganordnung mit einer Einheit zur Drehmomentübertragung, insbesondere Radantrieb, und mit einem Energiespeicher, insbesondere wiederaufladbare Batterie, in einer schematischen Darstellung;
- Figur 2: einen Funktionsplan zur schematischen Darstellung einer Drehzahladaption zwischen einer elektrischen Maschine und einer Verbrennungskraftmaschine.

### Ausführungsform(en) der Erfindung

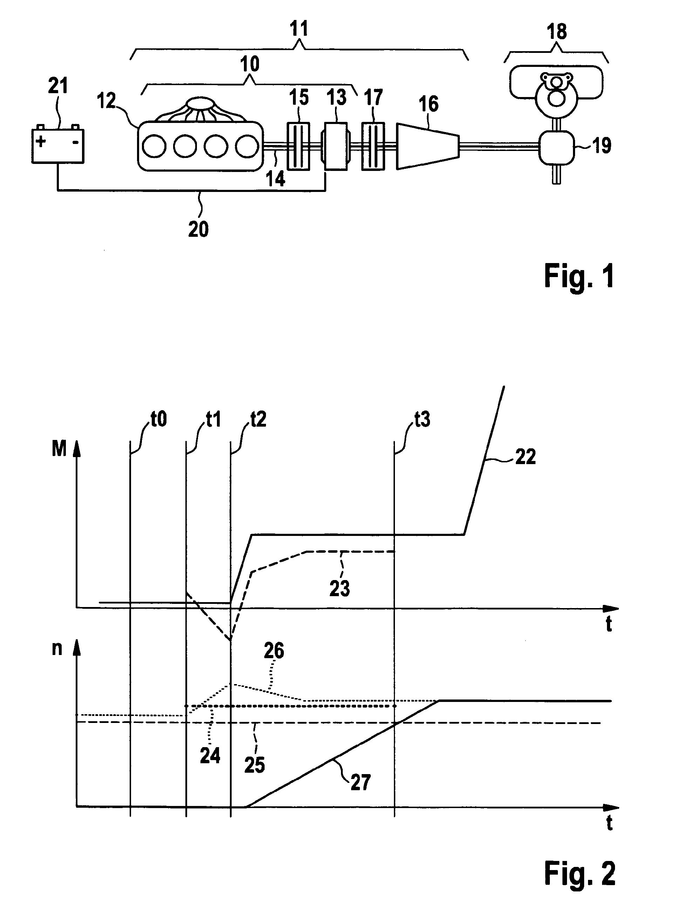

In Figur 1 ist eine Triebstranganordnung 10 als Teil eines Antriebsstrangs 11 gezeigt. Die Triebstranganordnung 10 weist eine Verbrennungskraftmaschine 12 und eine elektrische Maschine 13 auf, die über eine gemeinsame Antriebswelle 14 mittels einer Kupplung 15 kuppelbar sind. Die elektrische Maschine 13 steht weiterhin über die gemeinsame Antriebswelle 14 mit einem Getriebe 16 über einen hydraulischen Drehmomentwandler in einer Wirkverbindung. Mittels einer Zusatzkupplung 17, insbesondere Wandler-Überbrückungskupplung, ist eine direkte und schlupffreie Kuppelung zwischen der elektrischen Maschine 13 und dem Getriebe 16 erwirkbar. Sofern beide Kupplungen 15;17 geschlossen sind, ist dadurch auch die Verbrennungskraftmaschine 12 mit dem Getriebe 16 gekoppelt. Das Getriebe 16 ist vorzugsweise als so genanntes Automatikgetriebe ausgeführt, das letztlich über die Antriebswelle 14 mit einer Drehmoment-Übertragungseinheit 18, insbesondere Radantrieb, in einer mechanischen Wirkverbindung 19 steht. Eine elektrische Wirkverbindung 20 ist zudem zwischen der elektrischen Maschine 13 - auch Elektromaschine genannt - und einem Energiespeicher 21, insbesondere wiederaufladbare Batterie, gegeben.

Ein derartiger Aufbau des Antriebsstrangs 11 wird als Kraftstoff-/Elektro-Hybridantrieb beziehungsweise als Parallelhybrid vom Typ P2 bezeichnet, bei dem typischerweise die elektrische Maschine 13 nach der Kupplung 15 und vor dem Getriebe 16 eingebaut ist. Weitere Varianten unter den Parallelhybriden sind der P1-, der P3- und der P4-Hybrid. Bei dem P1-Hybriden sitzt die elektrische Maschine 13 auf der Antriebswelle 14, insbesondere Kurbelwelle, direkt hinter der Verbrennungskraftmaschine 12, also vor der Kupplung 15 und dem Getriebe 16. Bei dem P3-Hybriden sitzt die elektrische Maschine 13 an einem zu der Kupplung 15 abgewandten Ende des Getriebes 16. Bei dem P4-Hybriden schließlich wirkt die elektrische Maschine 13 nicht auf dieselbe Antriebswelle 14 wie die Verbrennungskraftmaschine 12, sondern ist auf einer separaten Welle angeordnet.

Die P2-Konfiguration des Antriebsstrangs 11 erlaubt einen reinen elektrischen Fahrbetrieb mit der elektrischen Maschine 13 bei geöffneter Kupplung 15. Sofern ein erhöhter Leistungsbedarf besteht oder der Energiespeicher 21 zu stark entleert ist, erfolgt eine Zuschaltung respektive ein Startvorgang der starterlosen Verbrennungskraftmaschine 12 über die Kupplung 15 und mittels der Elektromaschine 13 während des Fahrbetriebs derart, dass keine Störungen in dem Triebstrang 11 hervorgerufen werden. Hierbei wird die Kupplung 15 auf ein definiertes Schlupfmoment gesteuert, welches dazu dient, die Verbrennungskraftmaschine 12 so lange zu beschleunigen, bis sie die gleiche Drehzahl wie die elektrische Maschine 13 aufweist. Das zusätzliche Moment muss hierbei durch die elektrische Maschine 13 bereitgestellt werden.

Eine Ansteuerung der elektrischen Maschine 13 mit dem zusätzlichen Moment ist auf Grund ungenauer Informationen über das Kupplungsmoment - sowohl hinsichtlich dessen Betrag als auch hinsichtlich dessen zeitlichen Verlauf - nicht ohne weiteres möglich. Daher wird während eines Startvorgangs zusätzlich die Drehzahl der Elektromaschine 13 geregelt. Die Drehzahlregelung ist deshalb möglich, da zu Beginn des Startvorgangs die Überbrückungskupplung 17 des Drehmomentwandlers geöffnet wird. Damit ergibt sich ein Schlupf an dem Wandler, der durch eine Schlupfdrehzahl vorgehalten werden muss. Der Schlupf ist hierbei eine Funktion des zu übertragenden Antriebsmoments und kann in einer alternativen Ausführung auch aus dem Getriebe vorgegeben werden. Die Drehzahl der elektrischen Maschine 13 ist sehr gut messbar und dynamisch regelbar. Durch diese Kombination aus Vorsteuerung und Regelung ist prinzipiell ein guter Startablauf erreichbar.

Bei großen Fehlern zwischen dem an die elektrische Maschine 13 vorgesteuerten Kupplungsmoment, welches anhand einer über die Kupplung 15 aufgebrachten Anpresskraft definiert ist, und dem tatsächlichen Kupplungsmoment, kann die Drehzahlregelung den Fehler nicht ausregeln, da der Vorgang extrem dynamisch ist. Daher kommt eine Methode zum Einsatz, um die Genauigkeit des tatsächlichen Kupplungsmomentes und damit des Vorsteuermomentes zu ermitteln. Diese Methode wird auch als Adaption des Vorsteuermomentes an das benötigte Kupplungsmoment bezeichnet. Unter der Adaption wird vorliegend ein Abgleich respektive eine Synchronisation des Vorsteuermomentes mit dem benötigten Kupplungsmoment verstanden.

Gemäß einer bekannten Methode wird während eines Starts in Wahlhebelstellung P oder N die Kupplung 15 zuerst in einen schlupfenden Betrieb gebracht. Danach wird die Kupplung 15 solange langsam geschlossen, bis die Verbrennungskraftmaschine 12 anspringt. Bei diesem Vorgang ist das Kupplungsmoment, zumindest solange die Drehzahl nicht zu stark schwankt, gleich dem von der elektrischen Maschine 13 aufgebrachten Moment. Damit kann das tatsächliche Kupplungsmoment mit der elektrischen Maschine gemessen werden und steht als Korrekturwert zur Verfügung. Nachteilig ist bei dieser Methode jedoch, dass eine starke Verlängerung des Starts in der N- oder in der P-Stellung erfolgt. Außerdem kann die Adaption nur bei solchen Starts stattfinden, was normalerweise nur bei dem Erststart mittels eines Zündschlüssels möglich ist.

Gemäß der vorliegenden Erfindung ist es jedoch möglich, den Abgleich bei nahezu jedem Wiederstart respektive Neustart ohne direkten Eingriff in den Startvorgang an sich durchzuführen, und zwar anhand einer reinen messtechnischen Erfassung des Startvorgangs. Dazu wird gegen Ende eines jeden Startvorgangs, und zwar so lange die Kupplung 15 noch einem Schlupfeinfluss unterliegt, der Regelwert des Drehzahlreglers betrachtet.

Weicht der Regelwert von einem aus dem Kupplungs-Sollwert oder aus dem Kupplungs-Istwert abgeleiteten Vorsteuerwert ab, so ist dies ein Indiz dafür, das der Kupplungswert einem Fehlereinfluss unterliegt. Daher wird aus der Abweichung eine Korrektur der Kupplungskennlinie berechnet, die dann bei einem erneuten Start der Verbrennungskraftmaschine 12 beziehungsweise des Kupplungsvorganges wirksam wird. Dadurch fängt der Regler bei dem nächsten Start mit einer bereits verbesserten Vorsteuerung an. Nach mehreren derartigen Vorgängen ist dann die Vorsteuerung so feinjustiert, dass nur noch minimale Eingriffe des Reglers notwendig sind. Der wesentliche Vorteil besteht darin, dass die Adaption laufend während eines jeden Startvorgangs im Sinne einer Iteration stattfinden kann und der eigentliche Anlauf des Starts nicht negativ beeinflusst wird. Die Iteration bezeichnet eine Methode, bei der eine schrittweise, aber zielgerichtete Annäherung an eine Lösung eines Rechenproblems erfolgt. Sie besteht in der wiederholten Anwendung desselben Rechenverfahrens.

Gemäß Figur 2 ist ein Funktionsplan zur schematischen Darstellung einer Drehzahladaption zwischen der elektrischen Maschine 13 und der Verbrennungskraftmaschine 12 dargestellt. Hierbei sind für die Adaption relevante Größen während eines Wiederstarts gezeigt, welcher aus dem elektrischen Fahrzustand beginnt. Dabei ist zuerst die Wandler-Überbrückungskupplung 17 geschlossen und die elektrische Maschine 13 weist eine von der Fahrsituation des Fahrzeugs abhängige Geschwindigkeit auf. Während in einem oberen Teil des Funktionsplans ein Drehmoment-Zeit-Diagramm aufgezeigt ist, wird in einem unteren Teil des Funktionsplans ein Drehzahl-Zeit-Diagramm wiedergegeben. Das Drehmoment-Zeit-Diagramm umfasst hierbei einerseits einen Graph 22 eines Kupplungs-Istmoments und andererseits einen Graph 23 eines Reglermoments inklusive Vorsteuerung. In Ergänzung dazu ist das Drehzahl-Zeit-Diagramm versehen mit einem Niveau 24 einer Soll-Drehzahl, einem weiteren Niveau 25 einer Turbinendrehzahl des Drehmomentwandlers, einem Graph 26 für die Drehzahl der elektrischen Maschine 13 sowie einem Graph 27 für die Drehzahl der Verbrennungskraftmaschine 12.

Zu einem Zeitpunkt t0 wird ein Start ausgelöst. Dabei wird zuerst die Wandler-Überbrückungskupplung 17 des Drehmomentwandlers geöffnet. Zu einem Zeitpunkt t1 ist die Überbrückungskupplung 17 offen, so dass sich eine Drehzahldifferenz zwischen einer rotierenden Turbine des Drehmomentwandlers und der elektrischen Maschine 13 einstellen kann. Zu diesem Zeitpunkt wird die Regelung der Drehzahl aktiviert und ein Drehzahlsollwert vorgegeben. Dabei stellt sich, bis der Regler die Drehzahl tatsächlich einregeln kann, zuerst eine Drehzahldifferenz ein, die den augenblicklich gegebenen Momentenverhältnissen an dem Drehmomentwandler entspricht. Zu einem Zeitpunkt t2 wird dann begonnen, die Kupplung 15 auf den für den Start der Verbrennungskraftmaschine 12 benötigten Schlupfwert zu schließen. Ist das richtige Moment erreicht, beginnt die Verbrennungskraftmaschine 12 sich zu drehen und beschleunigt bis auf die Drehzahl der elektrischen Maschine 13. Nach Erreichung der Drehzahlgleichheit ist der Startvorgang abgeschlossen, so dass die Kupplung 15 gänzlich geschlossen werden kann und eine Deaktivierung der Regelung erfolgt.

Die Adaption wird zu einem Zeitpunkt t3 berechnet, und zwar kurz bevor die Verbrennungskraftmaschine 12 die Drehzahl der Elektromaschine 13 erreicht. Weist zu diesem Zeitpunkt das Reglermoment inklusive der Vorsteuerung einen geringeren Wert als das Kupplungsmoment auf, so wird offensichtlich weniger Moment der elektrischen Maschine 13 für die Kompensation der Kupplung 15 benötigt als durch die Kennlinie vorgegeben wird. In diesem Fall wird die Kennlinie der Kupplung 15 so verändert, dass bei gleichem Vorgabemoment zukünftig ein höheres tatsächliches Kupplungsmoment gestellt wird. Dadurch wird beim nächsten Startvorgang dann mehr Elektromaschinenmoment für die Kompensation benötigt. Ist das Reglermoment größer als der Kupplungswert, dann wird die Kupplungskennlinie entsprechend umgekehrt verändert. Die Veränderung kann wahlweise jedes mal um einen festen kleinen Offset oder Faktor erfolgen. Möglich ist weiterhin, die Größe der Änderung auch noch von der Größe des Reglerwertes abhängig zu machen. Generell sollte die Adaption nur dann durchgeführt werden, wenn der Startvorgang bestimmte Randbedingungen erfüllt. Zu den Randbedingungen kann beispielsweise zählen, dass die Drehzahl der elektrischen Maschine 13 innerhalb vorgegebener Grenzen liegt und/oder sich die Drehzahl der elektrischen Maschine 13 während des Vorgangs nicht zu stark ändert. Getriebeschaltungen sollten während des Vorgangs nicht stattfinden. Ferner darf sich ein Momentenwunsch respektive eine Momentenvorgabe des Fahrzeugfahrers während des Vorgangs nicht zu stark verändern und/oder die elektrische Maschine 13 darf keine Drehmomentbegrenzung erreichen.

Prinzipiell wird durch die Adaption das Einregeln der Drehzahlvorgabe durch eine Verbesserung der Vorsteuerung optimiert. Sofern die Drehzahlvorgabe stark von der Drehzahl abweicht, welche die elektrische Maschine 13 zum Zeitpunkt t1 typischerweise durch den Wandler annimmt, so kann dieser Umstand in der Adaption dadurch korrigiert werden, dass aus der Drehzahldifferenz zwischen der elektrischen Maschine 13 und der Drehzahlvorgabe zum Zeitpunkt t1 ein Korrekturwert berechnet wird, welcher auf die Differenz zwischen dem Reglermoment und dem Kupplungsmoment aufaddiert wird. Die Berechnung des Korrekturwertes kann zum Beispiel über ein Kennfeld aus den Wandlereigenschaften erfolgen. Durch diese Korrektur wird in der Folge jedoch nicht mehr genau die Drehzahlvorgabe eingeregelt, sondern im Effekt die Vorgabe durch eine bleibende Regelabweichung eines P-Reglers modifiziert. Gemäß einer optimierten Ausführung kann hierbei die Drehzahlvorgabe durch die Messung der Drehzahldifferenz zum Zeitpunkt t1 ebenfalls adaptiert werden.

Alternativ ist es auch möglich, mit der Kupplungsbetätigung so lange zu warten, bis der Drehzahlregler die Vorgabe eingeregelt hat. Der ohne Kupplungsbetätigung benötigte Regelwert kann dann als Offset von dem Regelwert mit Kupplungsbetätigung abgezogen werden. Dadurch würde sich ebenfalls der reine Kupplungseinfluss messen lassen. Allerdings würde die zusätzliche Wartezeit zu einer Verlängerung der Startzeit führen.

## Patentansprüche

1. Triebstranganordnung (10) eines Fahrzeugs mit zumindest einer Verbrennungskraftmaschine (12), die anhand einer daran mittels einer Kupplung (15) kuppelbaren und mittels eines Drehzahlreglers regelbaren elektrischen Maschine (13) startbar ist, **dadurch gekennzeichnet, dass** die Triebstranganordnung dafür ausgebildet ist, gegen Ende eines Startvorgangs bei noch schlupfender Kupplung (15) einen Regelwert, nämlich Reglemoment des elektrischen Maschine (13) inklusive Vorsteuerung, des Drehzahlreglers zu erfassen und einen Vergleich des Regelwertes mit einem Vorgabewert, nämlich kupplungs-Istmoment, durchzuführen zur Ermittlung einer Werteabweichung, welche mittels eines Korrekturwertes bei einem erneuten Startvorgang kompensierbar ist.

2. Triebstranganordnung (10) nach Anspruch 1, **dadurch gekennzeichnet, dass** der Korrekturwert als Festwert, über einen Korrekturfaktor oder in Abhängigkeit der Größe des Regelwertes bestimmbar ist.

3. Triebstranganordnung (10) nach einem der vorhergehenden Ansprüche, **dadurch gekennzeichnet, dass** die Verbrennungskraftmaschine (12) und/oder die elektrische Maschine (13) mittels eines hydraulischen Drehmomentwandlers mit einem Automatikgetriebe (16) in Wirkverbindung bringbar sind.

4. Triebstranganordnung (10) nach einem der vorhergehenden Ansprüche, **dadurch gekennzeichnet, dass** die Verbrennungskraftmaschine (12) und/oder die elektrische Maschine (13) mittels einer Wandler-Überbrückungskupplung (17) mit dem Automatikgetriebe (16) unmittelbar kuppelbar sind.

5. Triebstranganordnung (10) nach einem der vorhergehenden Ansprüche, **dadurch gekennzeichnet, dass** die elektrische Maschine (13) mit einem Energiespeicher (21), insbesondere wiederaufladbare Batterie, in einer Wirkverbindung (20) steht.

6. Verfahren zur Steuerung des Betriebes einer Triebstranganordnung (10) eines Fahrzeugs mit zumindest einer Verbrennungskraftmaschine (12), die anhand einer daran mittels einer Kupplung (15) kuppelbaren und mittels eines Drehzahlreglers regelbaren elektrischen Maschine (13) gestartet wird, **dadurch gekennzeichnet, dass** , gegen Ende eines Startvorgangs bei noch schlupfender Kupplung (15) ein Regelwert, nämlich Reglemoment des elektrischen Maschine (13), inklusive Vorsteuerung, des Drehzahlreglers erfasst wird und ein Vergleich des Regelwertes mit einem Vorgabewert, nämlich kupplungs-Istmoment, durchgeführt wird zur Ermittlung einer Werteabweichung, welche mittels eines Korrekturwertes bei einem erneuten Startvorgang kompensiert wird.

7. Verfahren nach Anspruch 6, **dadurch gekennzeichnet, dass** der Korrekturwert als Festwert, über einen Korrekturfaktor oder in Abhängigkeit der Größe des Regelwertes bestimmt wird.

8. Verfahren nach Anspruch 6 oder 7, **dadurch gekennzeichnet, dass** die Verbrennungskraftmaschine (12) und/oder die elektrische Maschine (13) mittels eines hydraulischen Drehmomentwandlers mit einem Automatikgetriebe (16) in Wirkverbindung gebracht werden.

9. Verfahren nach einem der Ansprüche 6 bis 8, **dadurch gekennzeichnet, dass** die Verbrennungskraftmaschine (12) und/oder die elektrische Maschine (13) mittels einer Wandler-Überbrückungskupplung (17) mit dem Automatikgetriebe (16) unmittelbar kuppelt werden.

10. Verfahren nach einem der Ansprüche 6 bis 9, **dadurch gekennzeichnet, dass** ein Energiespeicher (21), insbesondere wiederaufladbar Batterie, die elektrische Maschine (13) mit Energie versorgt oder mittels der elektrischen Maschine (13) wiederaufgeladen wird.

## Claims

1. Drive train arrangement (10) of a vehicle having at least one internal combustion engine (12) which can be started using an electric machine (13) which can be coupled by means of a clutch (15) and can be regulated by means of a speed regulator, **characterized in that** the drive train arrangement is configured for detecting a regulating value, namely regulator moment of the electric machine (13) including pilot control, of the speed regulator towards the end of a starting operation while the clutch (15) is still slipping, and carrying out a comparison of the regulating value with a predefined value, namely clutch actual moment, in order to determine a value deviation which can be compensated for by means of a correction value during a renewed starting operation.

2. Drive train arrangement (10) according to Claim 1, **characterized in that** the correction value can be determined as a fixed value, via a correction value or as a function of the magnitude of the regulating value.

3. Drive train arrangement (10) according to one of the preceding claims, **characterized in that** the internal combustion engine (12) and/or the electric machine (13) can be brought into operative connection with an automatic transmission (16) by means of a hydraulic torque converter.

4. Drive train arrangement (10) according to one of the preceding claims, **characterized in that** the internal combustion engine (12) and/or the electric machine (13) can be coupled directly to the automatic transmission (16) by means of a converter lock-up clutch (17).

5. Drive train arrangement (10) according to one of the preceding claims, **characterized in that** the electric machine (13) is operatively connected (20) to an energy store (21), in particular a rechargeable battery.

6. Method for controlling the operation of a drive train arrangement (10) of a vehicle having at least one internal combustion engine (12) which is started using an electric machine (13) which can be coupled by means of a clutch (15) and can be regulated by means of a speed regulator, **characterized in that** a regulating value, namely regulator moment of the electric machine (13) including pilot control, of the speed regulator is detected towards the end of a starting operation while the clutch (15) is still slipping, and a comparison of the regulating value with a predefined value, namely clutch actual moment, is carried out in order to determine a value deviation which can be compensated for by means of a correction value during a renewed starting operation.

7. Method according to Claim 6, **characterized in that** the correction value is determined as a fixed value, via a correction value or as a function of the magnitude of the regulating value.

8. Method according to Claim 6 or 7, **characterized in that** the internal combustion engine (12) and/or the electric machine (13) are brought into operative connection with an automatic transmission (16) by means of a hydraulic torque converter.

9. Method according to one of Claims 6 to 8, **characterized in that** the internal combustion engine (12) and/or the electric machine (13) are coupled directly to the automatic transmission (16) by means of a converter lock-up clutch (17).

10. Method according to one of Claims 6 to 9, **characterized in that** an energy store (21), in particular a rechargeable battery, supplies the electric machine (13) with energy or is recharged by means of the electric machine (13).

## Revendications

1. Agencement de transmission (10) d'un véhicule, comprenant au moins un moteur à combustion interne (12), qui peut être démarré à l'aide d'une machine électrique (13) pouvant être accouplée à celui-ci au moyen d'un embrayage (15) et pouvant être régulée au moyen d'un régulateur de régime, **caractérisé en ce que** l'agencement de transmission est réalisé de manière à détecter, vers la fin d'une opération de démarrage, lorsque l'embrayage (15) est encore en mode de glissement, une valeur de régulation, à savoir un couple de régulation de la machine électrique (13) y compris la commande pilote, du régulateur de régime, et à effectuer une comparaison de la valeur de régulation avec une valeur de consigne, à savoir un couple réel de l'embrayage, pour déterminer un écart entre ces valeurs, qui peut être compensé au moyen d'une valeur de correction lors d'une nouvelle opération de démarrage.

2. Agencement de transmission (10) selon la revendication 1, **caractérisé en ce que** la valeur de correction peut être déterminée en tant que valeur fixe, par le biais d'un facteur de correction ou en fonction de la grandeur de la valeur de régulation.

3. Agencement de transmission (10) selon l'une quelconque des revendications précédentes, **caractérisé en ce que** le moteur à combustion interne (12) et/ou la machine électrique (13) peuvent être amenés en liaison fonctionnelle au moyen d'un convertisseur de couple hydraulique avec une boîte de vitesse automatique (16).

4. Agencement de transmission (10) selon l'une quelconque des revendications précédentes, **caractérisé en ce que** le moteur à combustion interne (12) et/ou la machine électrique (13) peuvent être accouplés directement à la boîte de vitesse automatique (16) au moyen d'un embrayage de pontage-convertisseur (17).

5. Agencement de transmission (10) selon l'une quelconque des revendications précédentes, **caractérisé en ce que** la machine électrique (13) est en liaison fonctionnelle (20) avec un accumulateur d'énergie (21), en particulier une batterie rechargeable.

6. Procédé de commande du fonctionnement d'un agencement de transmission (10) d'un véhicule comprenant au moins un moteur à combustion interne (12), qui est démarré à l'aide d'une machine électrique (13) pouvant être accouplée à celui-ci au moyen d'un embrayage (15) et pouvant être régulée au moyen d'un régulateur de régime, **caractérisé en ce que** vers la fin d'une opération de démarrage, lorsque l'embrayage (15) est encore en mode de glissement, une valeur de régulation, à savoir un couple de régulation de la machine électrique (13) y compris la commande pilote, du régulateur de régime, est détectée, et une comparaison de la valeur de régulation avec une valeur de consigne, à savoir un couple réel de l'embrayage, est effectuée pour déterminer un écart entre ces valeurs, qui peut être compensé au moyen d'une valeur de correction lors d'une nouvelle opération de démarrage.

7. Procédé selon la revendication 6, **caractérisé en ce que** la valeur de correction est déterminée en tant que valeur fixe, par le biais d'un facteur de correction ou en fonction de la grandeur de la valeur de régulation.

8. Procédé selon la revendication 6 ou 7, **caractérisé en ce que** le moteur à combustion interne (12) et/ou la machine électrique (13) sont amenés en liaison fonctionnelle au moyen d'un convertisseur de couple hydraulique avec une boîte de vitesse automatique (16).

9. Procédé selon l'une quelconque des revendications 6 à 8, **caractérisé en ce que** le moteur à combustion interne (12) et/ou la machine électrique (13) sont accouplés directement à la boîte de vitesse automatique (16) au moyen d'un embrayage de pontage-convertisseur (17).

10. Procédé selon l'une quelconque des revendications 6 à 9, **caractérisé en ce qu'**un accumulateur d'énergie (21), en particulier une batterie rechargeable, alimente la machine électrique (13) en énergie ou peut être rechargé au moyen de la machine électrique (13).
